# EUROPEAN PATENT SPECIFICATION

(11) **EP 3 045 374 B1**
(45) Date of publication and mention of the grant of the patent: **26.02.2020**
(21) Application number: 16151916.0
(22) Date of filing: 19.01.2016
(51) Int. Cl.: B61F 5/30, B61F 5/32, G01G 19/08

(54) **WEIGHING ARRANGEMENT**
WÄGEANORDNUNG
AGENCEMENT DE PESÉE

(30) Priority: 19.01.2015 FI 20155040
(43) Date of publication of application: 20.07.2016
(73) Proprietor: VR-Yhtymä Oy, 00100 Helsinki (FI)
(72) Inventor: JAAKOLA, Eero, 00101 Helsinki (FI)
(74) Representative: Seppo Laine Oy

(56) References cited:
- EP-A1- 0 443 953
- WO-A1-2008/007067
- US-A1- 2009 031 918
- US-A1- 2010 162 919

## Description

### Field of the invention

The present invention relates to a weighing arrangement in the bogies and wheelsets of railway cars and other railway rolling stock.

### Background

Railway-car bogie and wheelset solutions are intended to attach the wheelsets flexibly and permit the axles to rotate and be steered according to the rails of the track. For the steering to be controlled, the flexes and movements of the structure must be suitably controlled and damped, so that uncontrolled movements will not take place within the operating speed range of the cars. In particular, the movements must be in all conditions as similar as possible, while there can be no deviations or variations in the kinetic forces. Detrimental variation can be caused, for example, by the formation of ice or rime on the guide or damper surfaces, in which case the forces and coefficients of friction affecting their movements will change uncontrollably.

Many different kinds of bogie and wheelset solutions are known. One solution for guiding sets of wheels is disclosed in United States patent application US2009/0031918. In it, at least some of the bogie's springs are supported at their upper end on a convex head-cup surface. The solution described is stated to improve transverse and longitudinal stiffness and friction properties. In this way hunting and wheel wear are reduced. Attempts have also been made to improve controllability by means of various elastomeric dampers and supports.

In railway transportation, as in other freight transportation, the weight of the load and the transport devices must be known, if only on account of official regulations. In railway rolling stock, the weight of the load and the entire combined mass can be used, for example, the adjust the braking effect, so that the correct weighing result is also important from the point of view of safety. One way to weigh the load of a car has been to connect a weighing valve or sensor to the suspension of the car, for example, in connection with the spring plate of a helical spring.

### Summary of the invention

By means of the known weighing devices the load of a car can certainly be determined, but errors can arise in the weighing, for example, due to the attitude of the spring plate changing according to the movements of the bogie or wheelset. The distance of movement required by the sensors or sensor valves can be long and the structures can be liable to damage in the demanding operating conditions of railway rolling stock.

For the aforementioned reasons, it would be advantageous to create a weighing arrangement, with the aid of which the load of a car can be determined more reliably than previously.

One special feature of the invention is intended to create a weighing arrangement for measuring the load from the bogies or wheelsets of a railway car.

The invention is based on there being, in the suspension of the wheel of a railway car, in which the frame of the car is set on at least one wheelset by means of a helical spring, in the wheelset a support structure fitted to the upper end of at least one spring, a friction damper, in which there is a spring plate and a wedge-like friction surface tilted relative to the horizontal plane. At least one weighing plate is fitted to support the slanting friction surface and a rotating shaft, supported so as not to rotate transversely to its longitudinal axis, is arranged parallel to the axle of the wheelset. At a distance from the rotating shaft is at least one weighing device, which a fitted between the weighing plate and the frame, in such a way that the weighing device forms a support point for the weighing plate.

According to one embodiment of the invention, a friction damper is connected to the weighing device, in which helical springs are used in the support of at least one wheelset, and a slider, in which there is at least one curved guide surface which has at least one radius of curvature relative to the axis parallel to the longitudinal axis of the wheelset, being fitted to the side of the upper end of each helical spring, and set to be supported on the axle box of the axle. At the upper end of the helical spring, a friction damper is arranged, the shape of which corresponds to the shape of the guide surface for supporting the spring plate of the upper end of the spring, and at least one planar slanting friction surface, which is arranged to correspond to a similar counter surface in the frame of the bogie/car.

According to one embodiment, the weighing device is a piezoelectric sensor.

According to one embodiment, the weighing device is a strain gauge sensor.

According to one embodiment, the weighing device is a pressure-reduction valve operating by liquid or gas pressure.

According to one embodiment, the weighing device is a spring scale.

Several advantages are gained with the aid of the invention.

With the aid of the invention, it is possible to eliminate or at least reduce weighing errors arising from the movements of the spring plate. The sensor itself is well protected in the construction, so that its weather resistance improves and its sensitivity to damage is reduced. The movement of the weighing device needed to determine the weight of the load is small, so that the movement hardly causes wear nor does the movement affect the steering of the wheels and the suspension of the axles. The movements of the weighing arrangement when running are small. The construction of the arrangement is simple and it can be easily added to the control apparatus of the rolling stock, for example, to the control of the braking system.

### Description of the drawings

Figure 1 shows a partial cross-section of one embodiment of the invention.

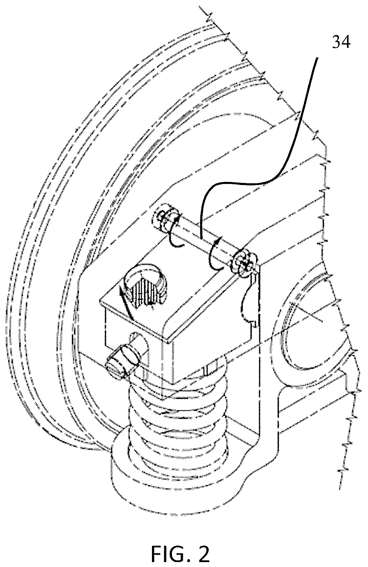

Figure 2 is a perspective view of the embodiment of Figure 1.

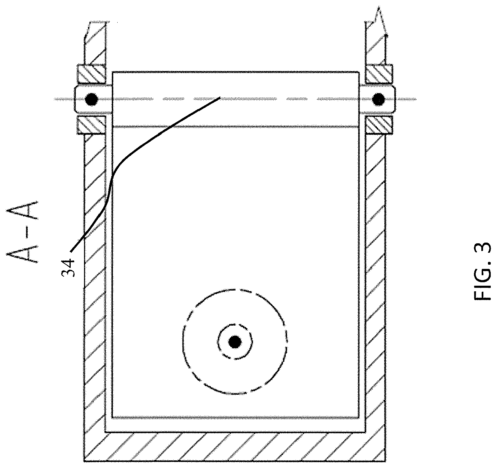

Figure 3 shows a depiction according to the section line A-A of Figure 1.

### Description of the embodiments

The present invention is intended primarily for use in the bogies and wheelsets of railway cars. It can also be adapted to other railway rolling stock.

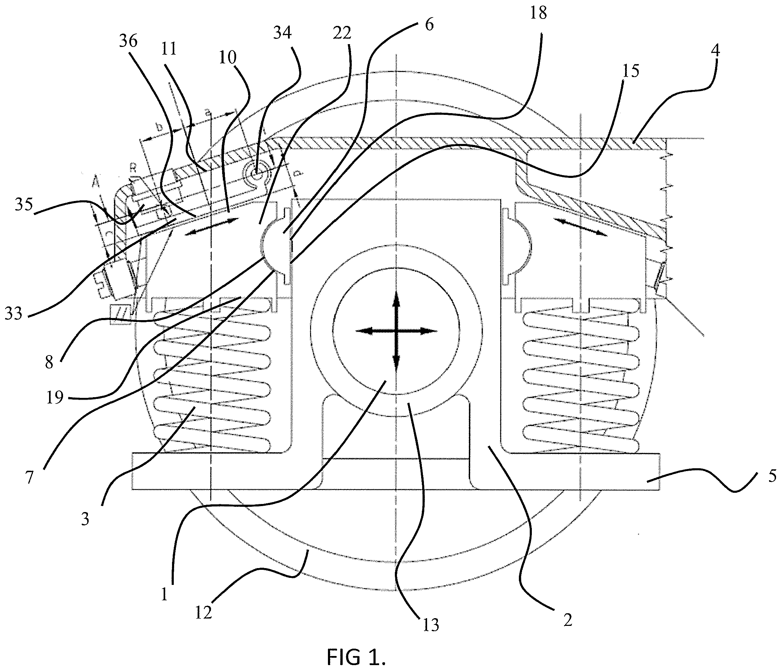

Figure 1 shows the support of a wheel set of a railway car, seen from the end of the axle 1. On the axle is a centre point 14 marked by an arrow and the longitudinal axis of the wheelset runs through this point. The axle 1 and the wheels 12 (2 items) form an axle set. The axle set and the axle boxes 2 (2 items) with their bearings 13 form a wheelset. The wheel pair and the opposite sides of the suspension are symmetrical. In the friction damper supported by a joint, in order to form support for a wheelset of a railway car there is at least one axle 1 with wheels 12, bearings 13, and axle boxes 2, as well as helical springs 3 fitted to the axle box at both sides of the axle 1 on at least both ends of the axle 1, in order to carry the railway car. The helical springs 3 can be supported either on support points in the car, i.e. on the frame 4 of the car, or on the frame 4 of the bogie, which in turn supports the railway car. In the axle box 2, there are head-cup plates 5, on which the helical springs 3 fitted between the axle box 2 and the bogie's/car's frame 4 are received.

The axle box 2 can also consist of several parts, for example, a bearing casing and a saddle, which contains the head cups of the springs. The bearing housing then consists of only the counter surface of the bearing of the axle and the vertical guide surfaces of the saddle. These pieces support each other in such a way that they can move slightly, according to the situation while running, relative to each other in both the longitudinal and transverse directions.

The friction damper comprises a slider 6, in which there is a first guide surface 7 and a second guide surface 15 supported on the axle box 2, fitted moveably to the axle box 2 of the axle 1 on the side of the upper end of every helical spring 3. In this embodiment, the guide surface 7 is a spherical guide surface 7 pointing away from the axle box. The sliding surface of the other guide surface 15 is planar, as is the head-cup surface 18 of its axle box 2. The first guide surface 7 is formed of at least one curved surface, which forms the guide surface 7 and which guide surface 7 has at least one radius of curvature around the axis parallel to the longitudinal axle of the wheelset. This guide surface can advantageously be cylindrical or spherical. A spherical guide surface permits a free rotation in all directions around the spherical surface, whereas a cylindrical guide surface supports the spring plate 9 against lateral torsion.

A spring plate 9, with the aid of which the actual friction damper is formed, is fitted to the upper end of the helical springs 3. The friction damper comprises a counter surface 8 supporting the guide surface 7 of the slider 6 of the axle box 2, the shape of which corresponds to the shape of the guide surface 7 and the head-cup surface 17 of the spring plate 9, in order to support the upper end of the spring 3. At the upper end of the friction damper, there is, on the opposite side of the head-cup surface 17 of the spring plate 9, at least one planar slanting friction surface 10, which is arranged to correspond to the similar counter surface 11 in the frame of the bogie/car 4. The slant of these surfaces relative to the horizontal can vary, and the surfaces or at least one of them can be surfaced, hardened, or otherwise treated in order to created suitable friction properties.

In the friction damper according to the invention, the slider 6 is supported against the side of the axle box 2, but does not prevent the axle box 2 from moving vertically. The movements of the wheelset seek to rotate the axle box 2 around its vertical axis relative to the frame of the bogie/car 4, and the movements of the axle box 2 and the spring 3 correspondingly tend to move the slider 6 and the friction damper's spring plate 9 arranged against it, but if the movement surface (7 and 8) between the slider 6 and the friction damper's spring plate 9 is given a spherical shape, a change in the attitude of the slider 6 will not cause a rotational force in the spring plate 9. The helical spring 3 conforms well to lateral movement, and thus the helical spring 3 continues to press the slanting friction surface 10 of the friction damper 22 evenly on the slanting counter surface 36 of the weighing plate 33, irrespective of the movements of the axle box. The spring plate 9 remains horizontal despite the movements, whereas the head-cup plates 5 of the helical springs of the axle box 2 can move according to the movements of the axle box 2 caused by the steering of the wheels 12. Due to this, the slanting surfaces are continuously in a planar contact with each other. The friction force between the surfaces remains constant and rime, ice, or dirt cannot collect between the surfaces, which could hinder the movement of the friction surfaces and thus the travel of the bogie/car. Correspondingly, the surface pressure in the movement surface (15 and 18) between the axle box 2 and the slider 6 remains even and the surfaces remain in parallel. This is made possible by the spherical or cylindrical curved surface acting as a pivot or bearing. It is best to arrange the longitudinal axis of the helical spring 3 at, or close to the centre point of the friction surface, when the surface pressure will be as even as possible over the whole surface.

A construction is depicted in the example of Figure 1, in which there is one helical spring 3 on each side of the axle box. In addition to these, there can be several springs in the construction, if required by the load-bearing capacity.

The construction described above forms at least one support structure, in which there is a wedge-like slanting friction surface 10, fitted to the upper end of a helical spring 3 in a wheelset. To support this at least one friction surface 10 a weighing plate 33 is fitted, which is attached to a rotating shaft 34, which is mounted in bearings to rotate around its longitudinal axis, and is arranged in parallel with the axle 2 of the wheel set and supported not to rotate transversely to its longitudinal axis. The rotating shaft is attached to the frame 4 of the bogie/car. If there is a separate frame in the bogie, the weighing device belongs to the structure of the bogie, and if the bogie is attached directly to the frame of the car, the weighing device is fitted to this joint surface. At a distance from the rotating shaft 34 in the direction of the friction surface is a weighing device 35, which is fitted between the weighing plate 33 and the counter surface of the weighing device, i.e. the frame 4 of the bogie/car, in such a way that the weighing device 35 forms a support point for the weighing plate. The surface of the weighing plate 35 forms a counter surface 36 to the slanting friction surface 10.

A continuation of the centre axis of the helical spring of the support of the wheelset of the car runs through the weighing plate and, on the basis of the ratio formed by the distance from the weighing device and the rotation shaft parallel to the counter surface of the weighing plate and this axis, the measurement range of the weighing device can be set suitably. Any weighing device whatever, by means of which a short movement distance or only a weighing reading on the change in pressure can be obtained, can be used at the weighing device. Suitable weighing devices are, for example, a piezoelectric sensor, a strain-gauge sensor, a pressure-reduction valve operating on liquid or gas pressure, or a spring scale.

The weighing plate 33 must be attached to the frame 4 of the bogie/car in such a way that it cannot twist or rotate laterally relative to the weighing movement. This is achieved in the manner described above by means of a rigid shaft and two bearings attached to the ends of the shaft. One alternative for implementing the shaft is to use a half shaft or a shaft partly lightened in the longitudinal direction, in which case its flat surface will lock the shaft against the frame 4 of the bogie/car and the weighing plate can rotate around the cylindrical surface of the shaft. This solution has the advantage that the centre point of rotation of the weighing plate is closer to the slanting friction surface (dimension d in Figure 1) and the movement of the weighing plate 33 will affect the measurement result as little as possible. One alternative is to use two parallel short shafts or some other rotating support point. The weighing plate can also be supported so as not to rotate, for instance, by means of guide grooves or rails. Three-point suspension, in which there are two support points that permit rotation but prevent tilting and a support point formed on the weighing device 35, is, however, simple and economical to implement. The support points of the rotating shaft or similar must be on a straight line parallel to the axle of the wheels of the car. The movements of the weighing device must be small and the weighing plate must be located in such a way that its lateral control is stiff, which demands a pivot support preventing tilting. If the axle boxes of the wheelset can move, for instance due to movement permitted by weighing, the wheels will wear unnecessarily in operation.

One alternative is to use a pressure-reduction valve as the sensor, which releases a pressure dependent of the spring load of the wheelset. Standard valves, for example, available from the manufacturers of brake systems, can be used as the valves. Because compressed-air brakes are widely used in railway rolling stock, the use of a compressed-or valve is economical and can be, if desired, integrated with the other systems of the car. The sensitivity of the measurement result and the measurement range depend of the distance of the point of contact of the weighing device 35 and the weighing plate 33 from the rotating shaft (dimension a + b in Figure 1), the distance between the centre axis of the helical spring 3 and the rotating shaft (dimension a), and the distance between the centre axis of the helical spring 3 and the point of contact of the weighing device 35 and the weighing plate 33 (dimension b). About 2 mm will be sufficient as the distance of movement of the weighing device, so that the necessary movements are extremely small and thus the effect on the steering and springing geometry is minimal. The effective lever arms are also small.

### List of reference numbers:

1 axle
2 axle box
3 helical spring
4 frame (frame of bogie/car)
5 head cup (axle box's 2 or saddle's head cup 5 for the helical spring 3)
6 slider
7 first guide surface (surface against the slider's 6 spring plate)
8 counter surface (surface against the spring plate's 9 slider 6)
9 spring plate
10 slanting friction surface (spring plate's 9 surface against the weighing plate 33)
11 slanting counter surface (counter surface 11 of the weighing device of the bogie's/car's frame 4)
12 wheel
13 bearing
14 centre point
15 second guide surface (slider's 6 surface against the axle box 2)
18 axle box's counter surface (surface of the axle box 2 against the slider 6)
22 frame of the friction damper
33 weighing plate
34 shaft of the weighing plate
35 weighing device
36 counter surface of the weighing plate (surface of the weighing plate 33 against the spring plate 9)

## Claims

1. Railway car comprising an arrangement for measuring loading from the suspension of a wheel (12) of the railway car, the railway car comprising a frame (4) set on at least one wheelset by means of helical springs (3), the arrangement comprising a support structure, in which there is a slanting friction surface (10), fitted to the upper end of at least one spring (3) in the wheelset,
**characterized by** further including
at least one weighing plate (33) supported on the slanting friction surface (10) a rotating shaft (34), which is mounted in bearings to rotate around its longitudinal axis, is fitted parallel to the axle (1) of the wheelset, is supported not to rotate transversely to its longitudinal axis, and is pivotally attached to the frame of the railway car, wherein the at least one weighing plate (33) is attached to the rotating shaft (34), and at least one weighing device (35), at a distance (a+b) from the rotating shaft, which is fitted between the weighing plate (33) and the counter surface of the weighing device, i.e. the frame (4) of the car, in such a way that the weighing device (35) forms a support point for the weighing plate (33), and wherein the weighing device (35) is attached to the frame of the railway car.

2. Railway car according to claim 1, **characterized**
**in that** the weighing device (35) is attached to a friction damper, in which in the suspension of at least one wheelset helical springs (3) are used and on the side of the upper end of each helical spring (3) a slider (6) is arranged to be supported on the axle box (2) of the axle (1) of the wheelset, and in which there is at least one curved guide surface (7), which guide surface (7) has at least one curvature radius (R), relative to the longitudinal axis of the wheelset, for supporting the upper end of the spring (3) of the spring plate (9), and at least one planar slanting friction surface (10), which is arranged to receive the weighing plate's counter surface (36) attached to the frame (4) of the bogie/car and supported by the weighing device (35).

3. Railway car according to claim 1 or 2, **characterized in that** the weighing plate (33) is supported by a three-point suspension, in which two support points are on the same straight line and one is formed from the contact point of the weighing device (35) and the weighing plate (33).

4. Railway car according to any of claims 1 - 3, **characterized in that** the weighing device (35) is a piezoelectric sensor.

5. Railway car according to any of claims 1 - 3, **characterized in that** the weighing device (35) is a strain-gauge sensor.

6. Railway car according to any of claims 1 - 3, **characterized in that** the weighing device (35) is a pressure-reduction valve operated by liquid or gas pressure.

7. Railway car according to any of claims 1 - 3, **characterized in that** the weighing device (35) is a spring scale.

## Patentansprüche

1. Eisenbahnwagen, umfassend eine Anordnung zum Messen einer Belastung von der Aufhängung eines Rades (12) des Eisenbahnwagens, wobei der Eisenbahn-wagen einen Rahmen (4) umfasst, der mit Hilfe von Schraubenfedern (3) auf mindestens einen Radsatz gesetzt ist, wobei die Anordnung eine Stützstruktur umfasst, bei der eine schräge Reibungsfläche (10) vorhanden ist, die an dem oberen Ende von mindestens einer Feder (3) in dem Radsatz montiert ist,
**dadurch gekennzeichnet, dass** er weiter aufweist
mindestens eine Wägeplatte (33), die auf der schrägen Reibungsfläche (10) abgestützt ist,
eine Drehwelle (34), die in Lagern montiert ist, um sich um ihre Längsachse zu drehen, ist parallel zur Radachse (1) des Radsatzes montiert, ist gelagert, um sich nicht quer zu ihrer Längsachse zu drehen, und ist an dem Rahmen des Eisenbahnwagens schwenkbar befestigt, wobei die mindestens eine Wägeplatte (33) an der Drehwelle (34) befestigt ist, und
mindestens eine Wägevorrichtung (35) in einem Abstand (a+b) von der Drehwelle, die zwischen der Wägeplatte (33) und der Gegenfläche der Wägevorrichtung, d.h. dem Rahmen (4) des Wagens, derart montiert ist, dass die Wägevorrichtung (35) einen Stützpunkt für die Wägeplatte (33) bildet, und wobei die Wägevorrichtung (35) an dem Rahmen des Eisenbahnwagens befestigt ist.

2. Eisenbahnwagen nach Anspruch 1, **dadurch gekennzeichnet,**
**dass** die Wägevorrichtung (35) an einem Reibungsdämpfer befestigt ist, bei dem in der Aufhängung von mindestens einem Radsatz Schraubenfedern (3) verwendet werden und auf der Seite des oberen Endes jeder Schraubenfeder (3) ein Schieber (6) angeordnet ist, um auf dem Achslager (2) der Radachse (1) des Radsatzes abgestützt zu werden, und bei dem mindestens eine gekrümmte Führungsfläche (7) vorhanden ist, welche Führungsfläche (7) mindestens einen Krümmungsradius (R) bezogen auf die Längsachse des Radsatzes aufweist, um das obere Ende der Feder (3) der Federplatte (9) abzustützen, und mindestens eine ebene, schräge Reibungsfläche (10), die angeordnet ist, um die an dem Rahmen (4) des Fahrgestells/Wagens befestigte und von der Wägevorrichtung (35) abgestützte Gegenfläche (36) der Wägeplatte zu empfangen.

3. Eisenbahnwagen nach Anspruch 1 oder 2, **dadurch gekennzeichnet, dass** die Wägeplatte (33) von einer Dreipunktaufhängung abgestützt wird, bei der zwei Stützpunkte auf der gleichen Geraden liegen und einer aus dem Berührungspunkt der Wägevorrichtung (35) und der Wägeplatte (33) gebildet wird.

4. Eisenbahnwagen nach einem der Ansprüche 1 - 3, **dadurch gekennzeichnet, dass** die Wägevorrichtung (35) ein piezoelektrischer Sensor ist.

5. Eisenbahnwagen nach einem der Ansprüche 1 - 3, **dadurch gekennzeichnet, dass** die Wägevorrichtung (35) ein Dehnungsmessstreifen-Sensor ist.

6. Eisenbahnwagen nach einem der Ansprüche 1 - 3, **dadurch gekennzeichnet, dass** die Wägevorrichtung (35) ein durch Flüssigkeits- oder Gasdruck betätigtes Druckminderventil ist.

7. Eisenbahnwagen nach einem der Ansprüche 1 - 3, **dadurch gekennzeichnet, dass** die Wägevorrichtung (35) eine Federwaage ist.

## Revendications

1. Wagon comprenant un agencement pour mesurer une charge de la suspension d'une roue (12) du wagon, le wagon comprenant un châssis (4) fixé sur au moins un essieu monté par l'intermédiaire de ressorts hélicoïdaux (3), l'agencement comprenant une structure de support, dans laquelle se trouve une surface de friction inclinée (10), ajustée à l'extrémité supérieure d'au moins un ressort (3) dans l'essieu monté,
**caractérisé** en qu'il inclut en outre
au moins une plaque de pesée (33) supportée sur la surface de friction inclinée (10),
un arbre rotatif (34), qui est monté dans des roulements pour tourner autour de son axe longitudinal, est monté parallèlement au moyeu (1) de l'essieu monté, est supporté pour ne pas tourner transversalement par rapport à son axe longitudinal, et est fixé de manière pivotante au châssis du wagon, dans lequel la au moins une plaque de pesée (33) est fixée à l'arbre rotatif (34), et
au moins un dispositif de pesée (35), à une distance (a+b) de l'arbre rotatif, qui est monté entre la plaque de pesée (33) et la contre-surface du dispositif de pesée, c'est-à-dire le châssis (4) du wagon, de telle manière que le dispositif de pesée (35) forme un point de support pour le plateau de pesée (33), et dans lequel le dispositif de pesée (35) est fixé au châssis du wagon.

2. Wagon selon la revendication 1, **caractérisé**
**en ce que** le dispositif de pesée (35) est fixé à un amortisseur à friction, dans lequel, dans la suspension d'au moins un essieu monté, des ressorts hélicoïdaux (3) sont utilisés et sur le côté de l'extrémité supérieure de chaque ressort hélicoïdal (3), un coulisseau (6) est agencé pour être supporté sur la boîte de moyeu (2) du moyeu (1) de l'essieu monté, et dans lequel il y a au moins une surface de guidage incurvée (7), laquelle surface de guidage (7) a au moins un rayon de courbure (R), par rapport à l'axe longitudinal de l'essieu monté, pour supporter l'extrémité supérieure du ressort (3) de la plaque à ressort (9), et au moins une surface de friction inclinée plane (10), qui est agencée pour recevoir la contre-surface (36) de la plaque de pesée fixée au châssis (4) du bogie/wagon et supportée par le dispositif de pesée (35).

3. Wagon selon la revendication 1 ou 2, **caractérisé en ce que** la plaque de pesée (33) est supportée par une suspension à trois points, dans laquelle deux points de support sont sur la même ligne droite et l'un est formé à partir du point de contact du dispositif de pesée (35) et de la plaque de pesée (33).

4. Wagon selon l'une quelconque des revendications 1 à 3, **caractérisé en ce que** le dispositif de pesée (35) est un capteur piézoélectrique.

5. Wagon selon l'une des revendications 1 à 3, **caractérisé en ce que** le dispositif de pesée (35) est un capteur à jauge de contrainte.

6. Wagon selon l'une quelconque des revendications 1 à 3, **caractérisé en ce que** le dispositif de pesée (35) est une soupape réductrice de pression actionnée par une pression de liquide ou de gaz.

7. Wagon selon l'une quelconque des revendications 1 à 3, **caractérisé en ce que** le dispositif de pesée (35) est un peson à ressort.
